# EUROPÄISCHE PATENTSCHRIFT

(11) **EP 1 178 942 B1**
(45) Veröffentlichungstag und Bekanntmachung des Hinweises auf die Patenterteilung: **07.05.2003**
(21) Anmeldenummer: 00943593.4
(22) Anmeldetag: 11.05.2000
(51) Int. Cl.: B65G 63/00

(54) **UMSCHLAGANLAGE FÜR STÜCKGUT, INSBESONDERE FÜR ISO-CONTAINER**
LOADING AND UNLOADING INSTALLATION FOR GENERAL CARGO, ESPECIALLY FOR ISO CONTAINERS
INSTALLATION DE TRANSBORDEMENT POUR MARCHANDISES DE DETAIL, NOTAMMENT POUR CONTENEURS ISO

(30) Priorität: 20.05.1999 DE 19923813
(43) Veröffentlichungstag der Anmeldung: 13.02.2002
(73) Patentinhaber: Gottwald Port Technology GmbH & Co. KG, 40597 Düsseldorf (DE)
(72) Erfinder: DOBNER, Mathias, D-41569 Rommerskirchen (DE); FRANZEN, Hermann, D-41238 Mönchengladbach (DE); KRÖLL, Joachim, D-41363 Jüchen (DE)
(74) Vertreter: Moser, Jörg Michael
(86) Internationale Anmeldenummer: DE0001524
(87) Internationale Veröffentlichungsnummer: WO00071452

(56) Entgegenhaltungen:
- EP-A- 0 768 256
- DE-C- 4 439 740
- NL-A- 9 302 101

## Beschreibung

Die Erfindung betrifft eine Umschlaganlage für Stückgut, insbesondere für ISO-Container, gemäß dem Oberbegriff des Anspruchs 1.

Für den Umschlag von ISO-Containern, zwischen verschiedenartigen Transportmitteln, beispielsweise Schiff, Bahn oder LKW werden Ladeanlagen eingesetzt, die einen weitestgehend störungsfreien Stückgutumschlag bei hohen Durchsatzzahlen gewährleisten müssen. Zentraler Bestandteil einer Container-Umschlaganlage ist meist ein Lager, das die Stückgutströme entkoppelt und somit die bedarfsgerechte Bedienung der verschiedenartigen Transportmittel sicherstellt. Die aufkommens- und bedarfsgerechte Bedienung der verschiedenartigen Transportmittel erfordert eine stückgutstromoptimierte Konzeptionierung der gesamten Umschlaganlage.

Aus der DE 44 39 740 C1 ist eine gattungsgemäße Umschlaganlage für Schiff-, Bahn- und LKW-Transport bekannt. Zentraler Bestandteil dieser Umschlaganlage ist ein Containerlager. Das Containerlager besteht aus mehreren einzelnen zeilenartigen Lagermodulen, in denen je ein Lagerkran zur Ein- und Auslagerung zum Einsatz kommt. Zwischen Schiff und Lager operieren Containerbrücken, die mit dem Lager über auf Fahrbahnen sich bewegenden Transportpaletten in Verbindung stehen. Weiterhin erfolgt der Umschlag zu flurgebundenen Transportmitteln, wie LKW und Bahn. Während der seeseitige Umschlagprozess zwischen Schiff und Lager weitestgehend automatisiert und dementsprechend schnell gestaltbar ist, ist zur Anpassung daran, d. h. zur Gewährleistung eines insgesamt ausgeglichenen Stückgutflusses, der Umschlag zwischen dem Lager und den landseitigen flurgebundenen Transportmitteln nur unter erhöhtem Aufwand seitens der hier eingesetzten Ladeanlagen zu bewerkstelligen. Ein Grund dafür ist, dass dieser Umschlagprozess wegen der manuell geführten flurgebundenen Transportmittel nur begrenzt automatisierbar ist. Wegen des weitestgehend manuellen Umschlagprozesses sind einschlägige Sicherheitsrichtlinien zu beachten, (beispielsweise ein Schutz gegen Auffahren und Herabfallen der Lasten) die mit einer möglichst schnellen Abwicklung des Umschlags im Zielkonflikt stehen.

Es ist daher die Aufgabe der vorliegenden Erfindung, eine Ladeanlage für flurgebundene Transportmittel innerhalb einer Umschlaganlage zu schaffen, die unter Beachtung von Sicherheitsvorschriften einen schnellen Umschlag mit minimalem Aufwand seitens der Ladeanlagen gewährleistet.

Die Aufgabe wird ausgehend von einer Umschlaganlage gemäß dem Oberbegriff von Anspruch 1 in Verbindung mit dessen kennzeichnenden Merkmalen gelöst. Die nachfolgenden Unteransprüche geben vorteilhafte Weiterbildungen der Erfindung an.

Die Erfindung schließt die technische Lehre ein, dass eine Ladeanlage für flurgebundene Transportmittel mindestens zwei ebenerdige Ladestationen für Transportmittel umfasst, denen je ein in der darüberliegenden zweiten Ebene angeordnetes und mindestens ein Lagerplatz aufweisender Zwischenpuffer zugeordnet ist. Von dem Zwischenpuffer aus erfolgt die Ent- bzw. Beladung des jeweils zugeordneten Transportmittels über entsprechende Ladekräne. Die Zwischenpuffer stehen zum einen untereinander in Verbindung und mindestens eines der beiden Puffer steht über ein Ladekran mit dem Lager in Verbindung.

Die in insoweit mehretagige Ladeanlage gestattet einen flexiblen Umschlag zu verschiedenartigen flurgebundenen Transportmitteln, ohne dass separate Ladeanlagen, beispielsweise für Bahn und LKW, benötigt werden. Damit sinkt der Aufwand seitens der Ladeanlage. Durch die auf der zweiten Ebene angeordneten und untereinander verbundenen Zwischenpuffer wird eine Entkopplung von Ankunftsrate und Bedienrate der umzuschlagenen Stückgüter erzielt, so dass ein schneller Umschlag gewährleistet ist. Die mehretagige bauliche Anordnung der Ladeanlage erleichtert die Beachtung der einschlägigen Sicherheitsvorschriften, da Ladestation und Fahrtbereiche für die manuellen Transportmittel exakt abgegrenzt sind.

Vorteilhafterweise ist der Ladekran gegenüber der Ladeanlage so angeordnet, dass unter Umgehung eines als Schnittstelle zum Lager vorgesehenen Zwischenpuffers der Ladekran direkt als Ladekran fungierend eine Ladestation, vorzugsweise für LKW, bedienen kann. Mit dieser Maßnahme kann ein Schnellumschlag realisiert werden, da die anderen in der Ladeanlage integrierten Transport- und Lagermittel nicht in Anspruch genommen werden.

Es ist vorteilhaft, wenn als Umsetztransporter für die Verbindung der Zwischenpuffer untereinander ein vollautomatischer Brückenkran eingesetzt wird, der in einer über den Zwischenpuffern gelegenen dritten Ebene der Ladeanlage auf einer Brücke angeordnet ist. Diese Anordnung ermöglicht einen Transport von Stückgütern zwischen den Zwischenpuffern durch ein einfach gestaltetes und in die Ladeanlage integriertes Transportmittel. Zusätzlich zu dem als Brückenkran ausgeführten Umsetztransporter kann ein niedrigbauendes schienengeführtes Satelliten-Trägerfahrzeug eingesetzt werden, das mit dem Brückenkran zusammenwirkt und das zum Transport des Stückgutes mit einer Hubausrüstung ausgestattet ist.

Eine weitere die Erfindung zur Gewährleistung eines störungsarmen Betriebsablaufes verbessernde Maßnahme besteht darin, ein in der dritten Ebene der Ladeanlage angeordnetes Service-Fahrzeug vorzusehen, mit dem der Ladekran von einem Lagermodul zu einem weiteren parallelen Lagermodul umsetzbar oder zu einer Servicestation transportierbar ist. Durch das Service-Fahrzeug ist es beispielsweise möglich, im Störungsfall der defekte Ladekran zu einer Servicestation zu transportieren und ersatzweise ein nicht benutzter Ladekran stattdessen zur Weiterarbeit umzusetzen. Das Service-Fahrzeug eröffnet somit einen flexiblen Einsatz von Ladekranen. Vorzugsweise ist das Service-Fahrzeug kranartig nach Art einer Winkelkatze ausgebildet, die zwei parallele Tragarme mit endseitigen Lastaufnahmemitteln aufweist, welche mit korrespondierenden Anschlagpunkten am Ladekran zusammenwirken. Alternativ dazu kann das Service-Fahrzeug auch als Brückenfahrzeug aus einem auf einer Brücke mit Schienenfahrbahnen verlaufenden Shuttle bestehen, dass an den Ladekran ankoppelbar ist. Dabei befindet sich die Schienenfahrbahn der Brücke auf demselben Höhenniveau wie eine Schienenfahrbahn des Ladekranes, so dass beide Schienenfahrbahnen koppelbar sind. Vorteilhafterweise ist das Shuttle batteriebetrieben und in einer Parkposition auf der Brücke aufladbar. Weiterhin ist auch ein Diesel-Elektro-Antrieb denkbar.

Eine weitere die Erfindung verbessernde Maßnahme besteht darin, dass die Station zum Be- und Entladen für LKW relativ zu dem zugeordneten und in der darüberliegenden Ebene befindlichen Zwischenpuffer derartig angeordnet ist, dass der sicherheitskritische Bereich oberhalb der Fahrerkabine des LKW's direkt unterhalb des Zwischenpuffers und damit außerhalb der Ladestation gelegen ist. Somit kann eine herabfallende Last nicht die Fahrerkabine des LKW's gefährden, da sie außerhalb dieses sicherheitskritischen Bereiches bewegt wird. Zur manuellen Ausführung des Ladevorganges für einen LKW kann eine Checkerkabine vorgesehen werden, die unterhalb des der Ladestation zugewandten Endbereiches des Zwischenpuffers angeordnet ist.

Zur Gewährleistung einer ungehinderten Sicht zum Ladekran und zum LKW ist die Checkerkabine vorteilhafterweise quer zu den Lagermodulen horizontal verfahrbar. Der Ladevorgang kann optional auch durch Überwachungskameras in eine Zentrale übermittelt und von dort ferngesteuert werden.

Eine weitere optional vorsehbare die Erfindung verbessernde Maßnahme besteht darin, dass im Anschluss an den bahnseitigen Zwischenpuffer und unterhalb des Ladekrans ein zusätzlicher Brückenkran als Umsetztransporter vorgesehen ist, dessen Schienenfahrbahn auf demselben Höhenniveau wie die Schienenfahrbahn des Zwischenpuffers angeordnet ist und mit diesem koppelbar ist. Ebenso kann an dem den bahnseitigen Zwischenpuffer gegenüberliegenden Ende des zusätzlichen Brückenkrans ein weiterer Zwischenpuffer angeordnet werden. Diese Maßnahmen können je nach erforderlichen Umschlagparametern gegebenenfalls ergriffen werden, um den Stückgutumschlag optimal zu gestalten.

Weitere die Erfindung verbessernde Maßnahmen sind in den Unteransprüchen gekennzeichnet bzw. werden nachstehend gemeinsam mit der Beschreibung eines bevorzugten Ausführungsbeispiels der Erfindung anhand der Figuren näher dargestellt. Es zeigt:
- Fig.1: eine Draufsicht auf eine Umschlaganlage für Schiffs-, Bahn- und LKW-Umschlag,
- Fig.2: eine Schnittdarstellung durch einen Kai am seeseitigen Teil der Umschlaganlage,
- Fig. 3: einen Ausschnitt aus Figur 2 im Bereich eines Brückenportals,
- Fig. 4: eine Seitenansicht auf das Lager seitens des Kais,
- Fig. 5: eine Seitenansicht einer Ladeanlage mit einer LKW- und einer Bahn-Ladestation,
- Fig. 6: eine Draufsicht auf eine Ladeanlage nach Figur 5,
- Fig. 7: eine Seitenansicht auf das Lager von Seiten der Ladestation,
- Fig. 8: eine Seitenansicht eines zweiten Ausführungsbeispiels einer Ladeanlage für eine LKW- und eine Bahn-Ladestation und
- Fig. 9: eine Draufsicht auf die Ladeanlage gemäß Figur 8:

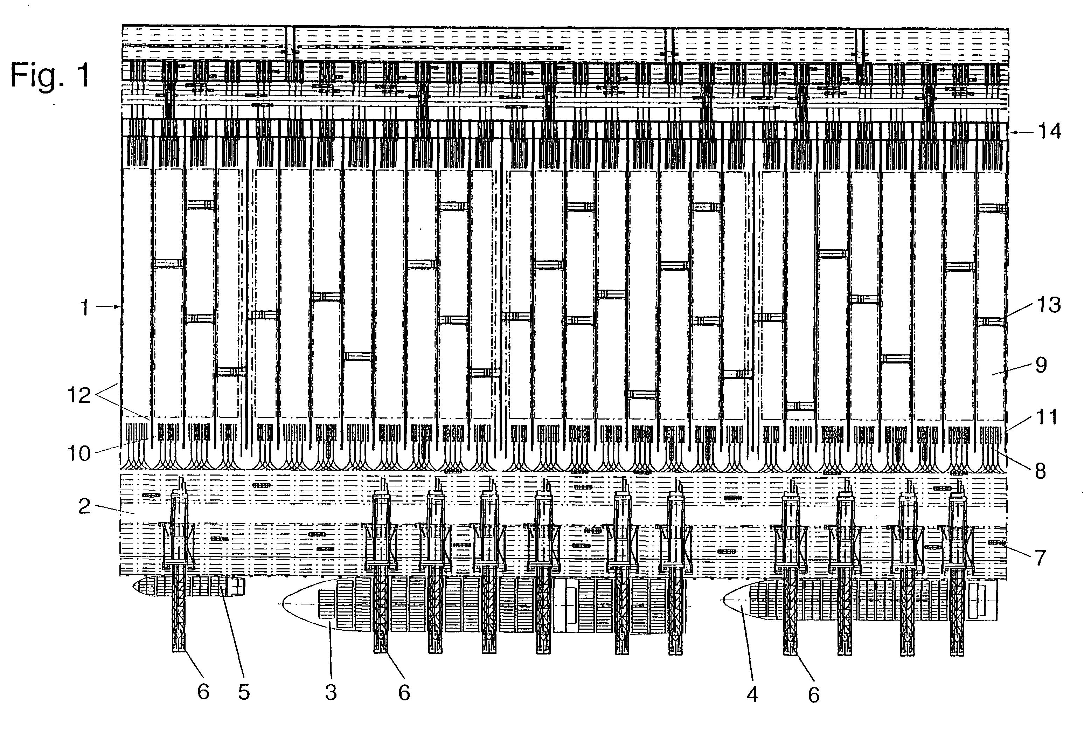

Ein vollautomatisches Lager 1 gemäß Fig. 1 ist längs eines Kais 2 angeordnet, an dem Schiffe 3, 4, 5 unterschiedliche Größe liegen. Parallel zu den Schiffen 3, 4, 5 operieren Containerbrücken 6. Beim Entladevorgang transportieren die Containerbrücken 6 Container 10 als Stückgut zu fahrerlosen Transportfahrzeugen (FTF) 7. Aktiviert und unterstützt durch eine entsprechende Lade- und Lagersteuerung navigieren die FTF 7 zu einem Übergabeplatz 8 am Lager 9 und übergeben dort den Container 10 an einen stationären 4-fachen Zwischenpuffer 11, das je einem zeilenförmigen Lagermodul 12 zugeordnet ist. Ein im Lagermodul 12 operierender vollautomatischer Ladekran 13 transportiert die Container 10 aus dem Zwischenpuffer 11 entweder ins Lager 9 oder direkt zur Ladeanlage 14 für einen LKW- und Bahnumschlag.

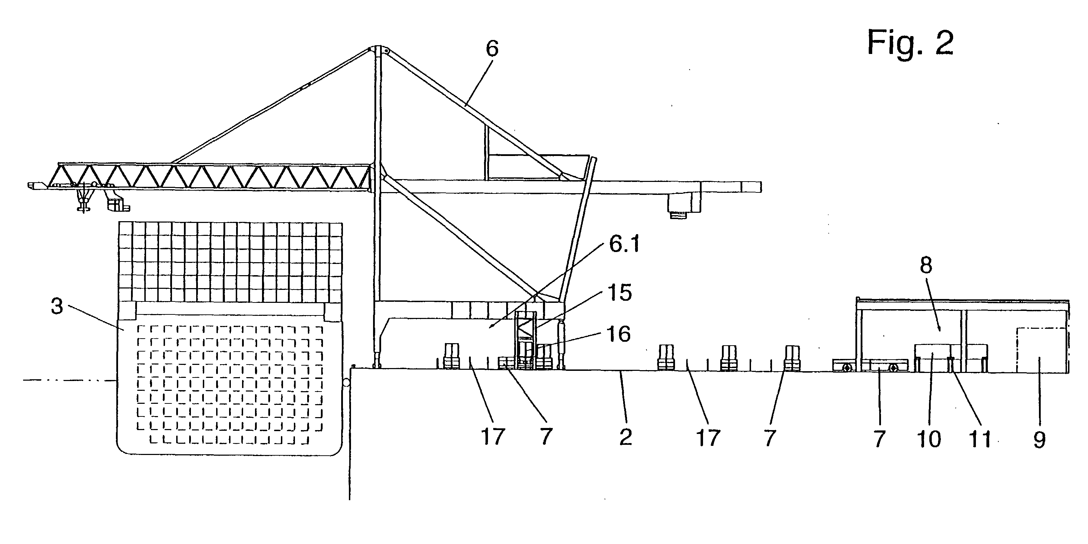

Gemäß Fig. 2 ist innerhalb eines Brückenportals 6.1 der Containerbrücke 6 ein starres Ladegestell 15 aufgehängt. Die Position des Ladegestells 15 ist veränderbar und wird durch die Zuordnung einer der Ladespuren 16 der FTF 7 für eine bestimmte Containerbrücke 6 festgelegt. Nach der Übernahme des Containers 10 mittels Hubeinrichtung 7.1 des FTF 7 vom Ladegestell 15 wird der Container 10 über eine der Fahrspuren 17 bis zum Zwischenpuffer 11 des Lagers 9 transportiert und dort durch die sich senkende Hubeinrichtung 7.1 am Übergabeplatz 8 abgesetzt.

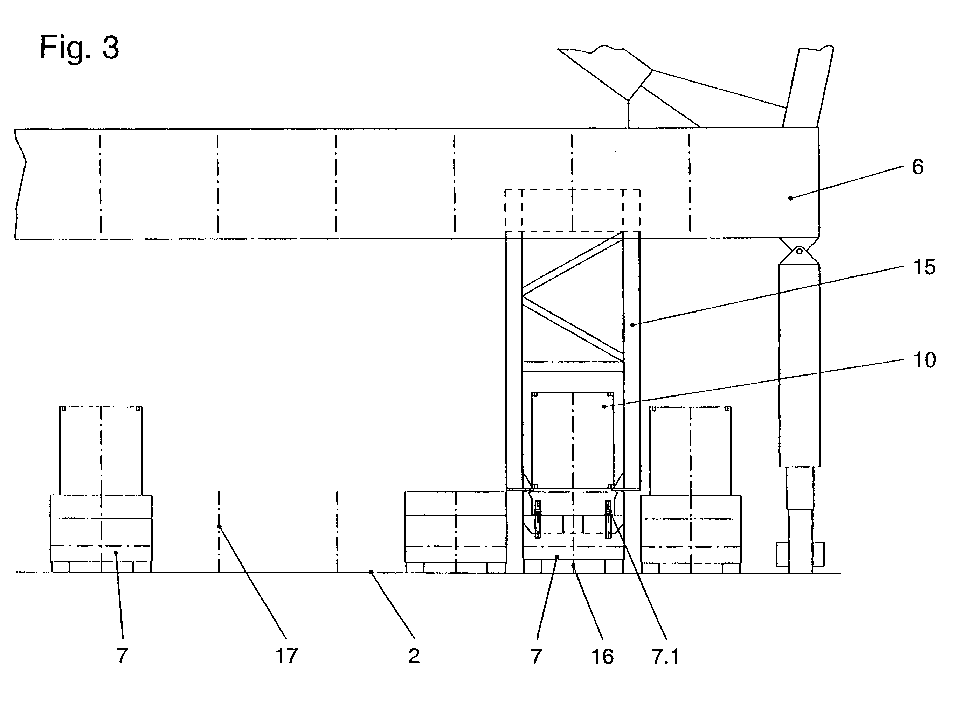

In der für die Containerbrücke 6 gemäß Fig. 3 spezifisch festgelegten Ladespur 16 des FTF 7 übernimmt das mit der Hubeinrichtung 7.1 ausgestattete FTF 7 den Container 10 vom Ladegestell 15. Das Ladegestell 15 ist in seinen geometrischen Abmessungen so gestaltet, dass es nicht das Ladeprofil der auf den Fahrspuren 17 vorbeifahrenden FTF 7 beeinträchtigt.

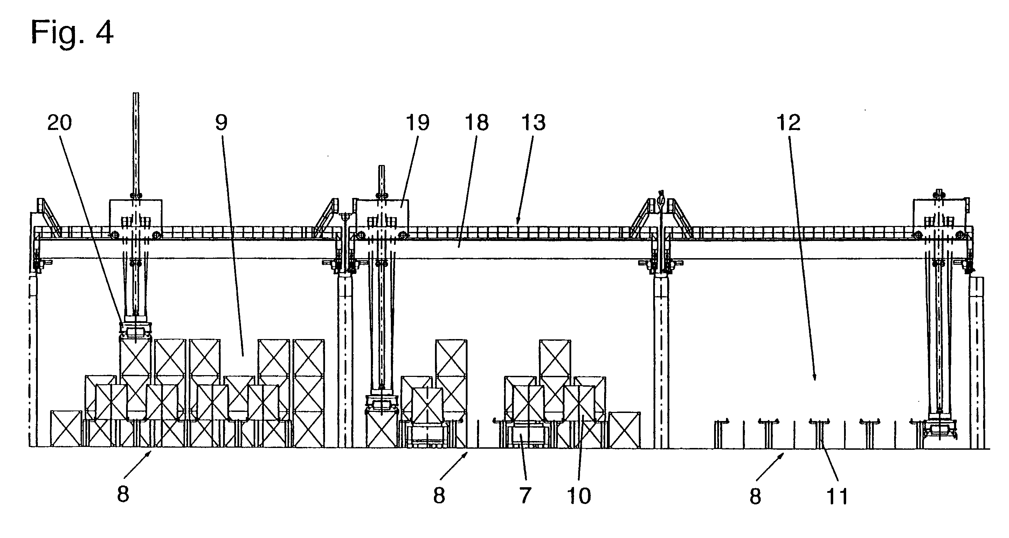

Die in Fig. 4 dargestellten drei Übergabeplätze 8 weisen je 4-fache Zwischenpuffer 11 am Lager 9 auf. Bedingt durch den starren Zwischenpuffer 11 ist das FTF 7 in der Lage, mit seiner Hubeinrichtung 7.1 den Container 10 in der Ladestation abzusetzen, unabhängig von der momentanen Verfügbarkeit des für jedes Lagermodul 12 zuständigen Ladekranes 13. Jeder Ladekran 13 besteht aus einer Brücke 18, einer Katze 19 und einem Spreader 20.

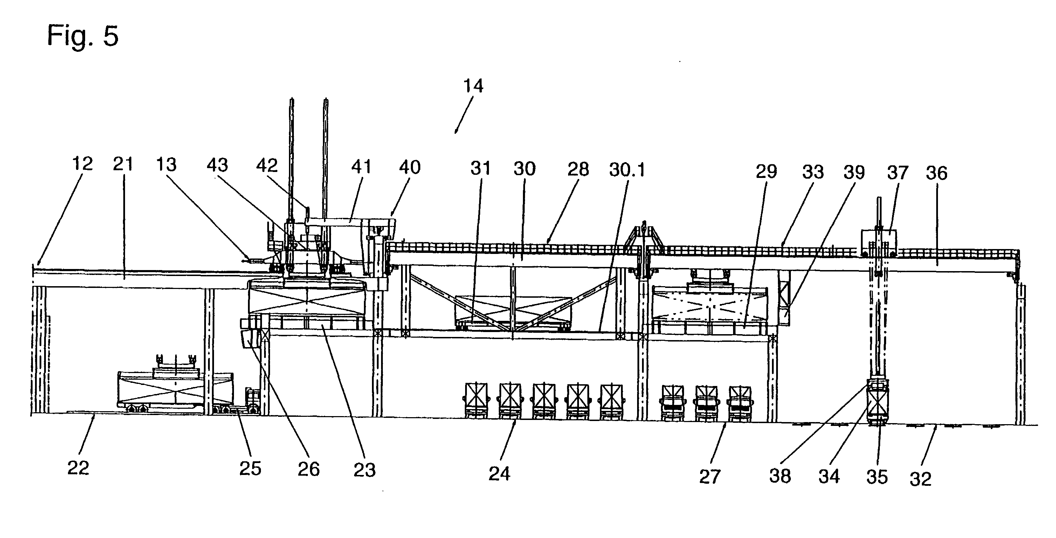

Gemäß Fig. 5 ist am landseitigen Ende des Lagermoduls 12 der Ladekran 13 auf einer aufgeständerten Kranbahn 21 angeordnet. Auf Bodenniveau befindet sich eine Ladestation 22 für LKW 25. In der Ebene direkt unterhalb der Kranbahn 21 ist ein der Ladestation 22 zugeordneter 3-facher Zwischenpuffer 23 angeordnet. Die Ladestation 22 und der Zwischenpuffer 23 sind relativ zueinander so angeordnet, dass der sicherheitskritische Bereich oberhalb der Fahrerkabine des LKW 25 nicht durch Anfahren oder Herabfallen der Last gefährdet ist. Die Zufahrt zu Ladestation 22 erfolgt über eine 5-spurige Infahrtstraße 24. In der dem LKW 25 zugewiesenen Ladestation 22 ist der LKW 25 rückwärts eingeparkt. Unterhalb des Zwischenpuffers 23 und vor der Ladestation 22 ist eine horizontal verfahrbare Checkerkabine 26 aufgehängt. Die Verfahrbarkeit der Checkerkabine 26 ist mittels eines Mono-Rail-Systems gewährleistet. Abhängig von der Lagergröße bedient ein Checker oder Operator eine Anzahl Lagermodule 12 parallel zur Infahrtstraße 24 und überwacht und tätigt den Stückgutumschlag. Die Abfahrt der LKW's erfolgt bis zu einer Wendemöglichkeit über die Infahrtstraße 24 und danach über die 3-spurige Abfahrtstraße 27. Im Anschluss an den Zwischenpuffer 23 operiert ein Umsetztransporter 28 in Form eines vollautomatischen Brückkranes als Verbindungselement zu einem Zwischenpuffer 29 auf der Bahnseite. In der Mitte der Brücke 30 ist ein Satelliten-Trägerfahrzeug 31 positioniert, das seine Antriebsenergie über ein stromführendes Kabel vom Umsetztransporter 28 erhält. Das niedrigbauende Satelliten-Trägerfahrzeug 31 fährt auf einer Schienenfahrbahn 30.1 bis in den Zwischenpuffer 23 und übernimmt mittels Hubeinrichtung 31.1 den Container. Nachdem das Satelliten-Trägerfahrzeug 31 wieder in der Brückenkranmitte positioniert ist, fährt der Umsetztransporter 28 gesteuert durch eine Lager- und Ladesteuerung zum anderen Zwischenpuffer 29. Dort setzt die Hubeinrichtung 31.1 des Satelliten-Trägerfahrzeuges 31 den Container im vorbestimmten Lagerplatz ab. Oberhalb des bahnseitigen Zwischenpuffers 29 und der zugeordneten Ladestation 32 operiert ein manuell betriebener Ladekran 33, der den Container 34 vom Lagerplatz des Zwischenpuffers 29 zu einem Waggon 35 befördert. Der Ladekran 33 besteht aus einer Brücke 36, einer Katze 37 und einem Spreader 38. Eine Krankabine 39 ist so positioniert, dass der Kranfahrer ein optimale Sicht zum Waggon 35 erhält.

Ein an der Ladeanlage 14 angeordnetes service-Fahrzeug 40 dient der Gewährleistung eines störungsfreien Betriebsablaufes im Lager 9. Das Service-Fahrzeug 40 ist in der Lage, in sehr kurzer Zeit ein Ladekran 13 von einem Lagermodul 12 zu einem anderen Lagermodul 12 des Lagers 9 oder auch zu einer in der Umschlaganlage integrierten Servicestation zu transportieren. Anordnung und Bauform des Service-Fahrzeuges 40 sind so gewählt, dass während des Umsetzvorganges eines Ladekranes 13 der Containerumschlag im Bereich der Ladeanlage 14 nicht behindert wird. Das Service-Fahrzeug 40 ist in diesem Ausführungsbeispiel als eine Winkelkatze mit zwei parallelen Tragarmen 41 und darin gelagerten Lastaufnahmemitteln 42 konzepiert. Der Ladekran 13 besitzt entsprechende automatisch arretierbare Anschlagpunkte 43, die mit den Lastaufnahmemitteln 42 korrespondieren.

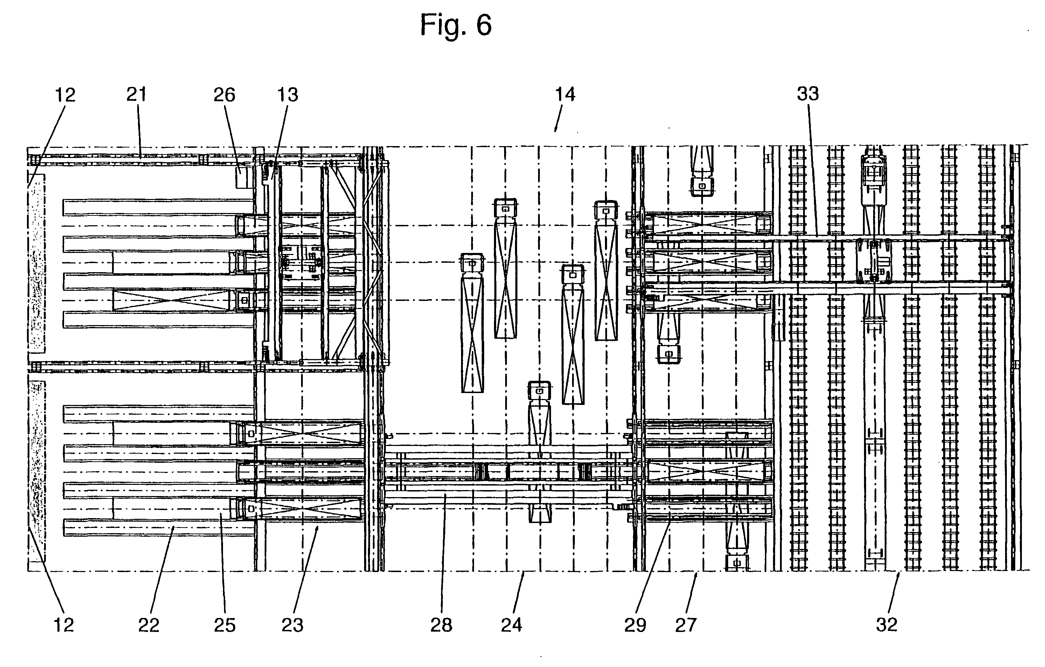

Zur lagerseitigen Anpassung an mehrere Lagermodule 12 gemäß Fig. 6 verfügt die Ladeanlage 14 über mehrere je den Lagermodulen 12 zugeordnete aufgeständerte Kranbahnen 21, auf denen ein je einem Lagermodul zugeordneter Ladekran 13 verfahrbar ist. Die Ladestation 22 für LKW 25 ist 3-fach ausgeführt. Ebenso ist das Zwischenpuffer 23 3-fach konzepiert. Zu der Ladestation 22 für LKW 25 führt eine 5-spurige Infahrtstraße 24, sowie eine 3-spurige Abfahrtstraße 27. Oberhalb der Zufahrtstraße 24 befindet sich der vollautomatische Umsetztransporter 28 in Form eines Brückenkranes. Oberhalb der Abfahrtstraße 27 und der bahnseitigen Ladestation 32 ist der manuell betriebene Ladekran 33 bei der Beladung eines Waggons dargestellt.

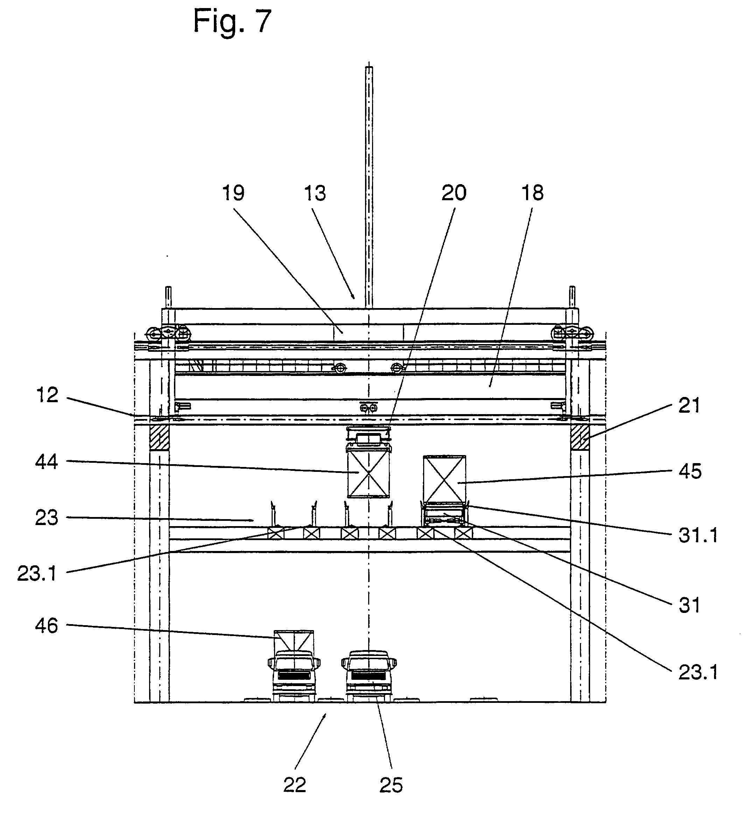

In der stirnseitigen Sicht auf ein Lagermodul 12 gemäß Fig. 7 ist das auf der aufgeständerten Kranbahn 21 befindliche brückenartige Ladekran 13 entlang des Lagermoduls 12 verfahrbar. Quer dazu erfolgt auf der Brücke 18 mittels der Katze 19 und des Spreaders 20 der Transport des Containers 44 zu einem der Lagerplätze des Zwischenpuffers 23. Das Satelliten-Trägerfahrzeug 31 ist verfahrbar auf der Schienenfahrbahn 23.1 angeordnet und verfügt über die Hubeinrichtung 31.1. Das Satelliten-Trägerfahrzeug 31 transportiert den Container 45 quer zur Fahrtrichtung der Katze 19. Direkt unterhalb der drei Lagerplätze des Zwischenpuffers 23 kann die Be-/Entladung eines je zugeordneten LKW 25 erfolgen. Zu diesem Zwecke besitzt die Ladestation 22 drei Stellplätze für LKW 25.

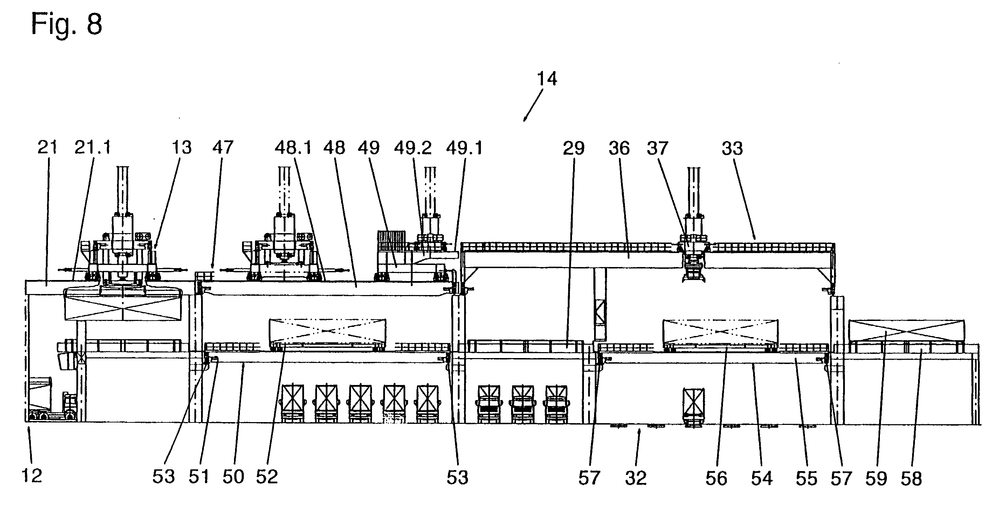

Eine weitere Ausführungsform der Ladeanlage 14 gemäß Figur 8 ist am stirnseitigen Ende eines Lagermoduls 12 mit dem hierin operierenden Ladekran 13 angeordnet, das auf der aufgeständerten Kranbahn 21 verfahrbar ist. Zur Umsetzung von Ladekranen 13 ist hier ein Service-Fahrreug 47 vorgesehen. Das Service-Fahrzeug 47 ist analog in der Lage, innerhalb kürzester Zeit einen Ladekran 13 von einem Lagermodul 12 zu übernehmen und zu einem anderen Lagermodul 12 oder zu einer Service-Station zu transportieren. Die Bauform des Service-Fahrzeuges 47 ist so gewählt, daß während des Umsetzvorganges eines Ladekranes 13 der Container-Umschlag im Bereich der Ladestationen 22 und 32 nicht behindert wird. Das Service-Fahrzeug 47 besteht aus einer Brücke 48 und aus einem batteriebetriebenen Shuttle 49, 49.1, 49.2. In der Parkposition des Shuttle 49, 49.1, 49.2 auf der Brücke 48 findet der Ladevorgang der Batterien statt. Alternativ wäre für das Shuttle 49, 49.1, 49.2 auch ein Diesel-Elektro-Antrieb denkbar. Die Schienenfahrbahn 48.1 der Brücke 48 befindet sich auf demselben Niveau wie die Schienenfahrbahn 21.1 der Kranbahn 21. In der Regel ist - beispielsweise zur turnusgemäßen Wartung - ein eigenständiges Auffahren des Ladekranes 13 auf die Brücke 48 vorgesehen. Die Anordnung der Kranbahnen 21 und die unabhängige Energiequelle des Shuttle 49, 49.1, 49.2 ermöglichen es dem Shuttle 49, 49.1, 49.2 in ein Lagermodul 12 hineinzufahren, an einen Ladekran 13 anzukoppeln und dieses schließlich bis zur Brücke 48 herauszuziehen. Ein als Verbindungselement zum bahnseitigen Zwischenpuffer 29 dienender vollautomatischer Umsetztransporter 50 besteht als Brückenkran aus einer Brücke 51 und einem Satelliten-Trägerfahrzeug 52. Abgesehen von einer tiefer angeordneten Schienenfahrbahn 53, sind Aufbau und Funktion dieses Umsetztransporters 50 mit dem Service-Fahrreug 40 in Figur 5 identisch.

Ein zusätzlicher vollautomatischer Brückenkran 54 als Umsetztransporter ist im Anschluß an den bahnseitigen Zwischenpuffer 29 und unterhalb des Ladekrans 33 vorgesehen. Der Brückenkran 54 besteht aus einer Brücke 55 und dem Satelliten-Trägerfahrzeug 56. Eine Schienenfahrbahn 57 ist auf demselben Niveau wie die Schienenfahrbahn 53 angeordnet.

Der Brückenkran 54 dient dem schnellen An- und Abtransport von Containern in der bahnseitigen Ladestation 32 und als Verbindungselement zu einem weiteren bahnseitigen Zwischenpuffer 58. Container 59 im Zwischenpuffer 58 werden in diesem angeschlossenen Bereich konventionell mittels reach-stacker oder straddle-carrier umgeschlagen. Das Zwischenlager 58 dient hier als Schnittstelle zu einem Distributionspark.

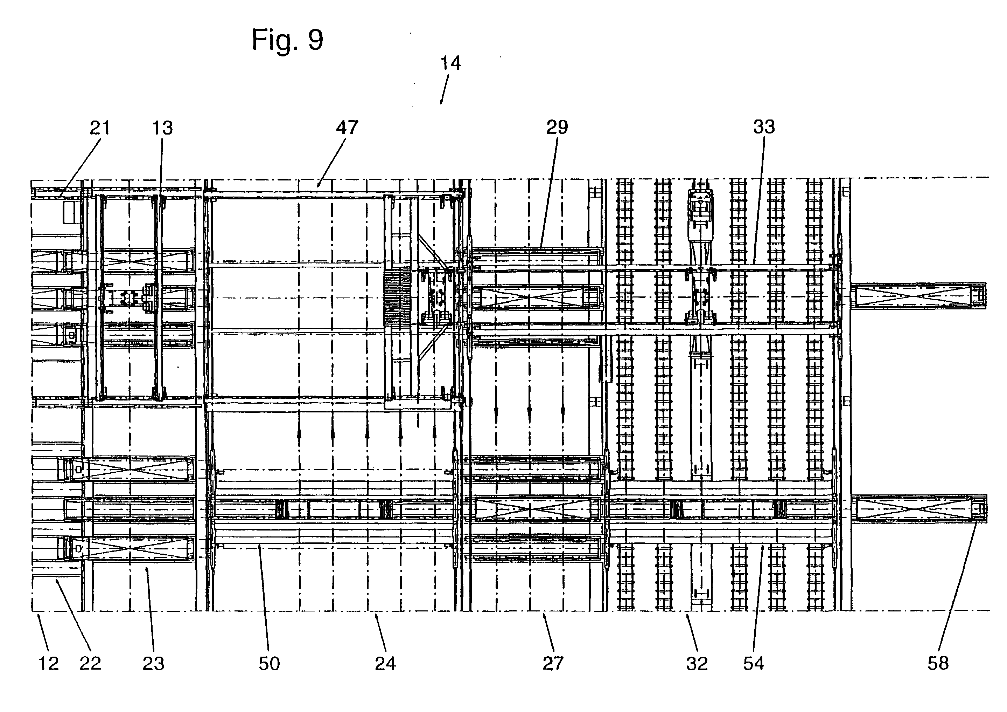

Am stirnseitigen Ende zweier Lagermodule 12 gemäß Figur 9 ist die aufgeständerte Kranbahn 21, ein Ladekran 13 sowie eine 3-fach ausgeführte Ladestation 22 für LKW 25 vorgesehen. Weiterhin ist der Zwischenpuffer 23 3-fach ausgeführt, die Infahrtstraße 24 ist 5-spurig und die Abfahrtsstraße 27 3-spurig konzipiert. Oberhalb der Zufahrtstraße 24 ist das Service-Fahrzeug 47 sowie der Umsetztransporter 50 dargestellt. Oberhalb der Abfahrtstraße 27 und der bahnseitigen Ladestation 32 ist der manuell betriebene Ladekran 33, der 3-fache Zwischenpuffer 29 sowie der Brückenkran 54 gezeigt. Die von drei Seiten her freie Zufahrt zum vorzugsweise 1-fachen Zwischenpuffer 58 als Schnittstelle zu dem Distributionspark ermöglicht einen konventionellen Containerumschlag.

## Patentansprüche

1. Umschlaganlage für Stückgut (10), insbesondere für ISO-Container, mit einem aus einzelnen zeilenartigen Lagermodulen (12) bestehenden Lager (9) und mindestens einer quer zu den Lagermodulen (12) verfahrbaren Ladeanlage (14) für flurgebundene Transportmittel (25, 35), zwischen denen ein jedem Lagermodul (12) zugeordneter Ladekran (13) operiert,
**dadurch gekennzeichnet,**
**daß** die Ladeanlage (14) mindestens zwei ebenerdige Ladestationen (22, 32) für Transportmittel (25, 35) umfaßt, denen je ein in der darüberliegenden zweiten Ebene angeordnetes und mindestens einen Lagerplatz aufweisender Zwischenpuffer (23, 29) zugeordnet ist, von dem aus mittels eines je zugeordneten Ladekranes (13, 33) das jeweilige Transportmittel (25 bzw.35) manuell ent/beladbar ist, wobei die Zwischenpuffer (23, 29) über einen Umsetztransporter (28) untereinander und der Zwischenpuffer (23) über den Ladekran (13) mit dem Lager (9) in Verbindung steht.

2. Umschlaganlage nach Anspruch 1,
**dadurch gekennzeichnet,**
**daß** mit dem Ladekran (13) unter Umgehung eines als Schnittstelle zum Lager (9) vorgesehenen Zwischenpuffers (23) direkt als Ladekran fungierend eine Ladestation (22) bedienbar ist.

3. Umschlaganlage nach Anspruch 1,
**dadurch gekennzeichnet,**
**daß** als Umsetztransporter (28) ein vollautomatischer Brückenkran vorgesehen ist, der sich in einer über den Zwischenpuffern (23, 29) gelegenen dritten Ebene bewegt.

4. Umschlaganlage nach Anspruch 1,
**dadurch gekennzeichnet,**
**daß** zur Gewährleistung eines störungsarmen Betriebsablaufes ein in der dritten Ebene der Ladeanlage (14) angeordnetes Service-Fahrzeug (40) vorgesehen ist, mit dem der Ladekran (13) von einem Lagermodul (12) zu einem weiteren parallelen Lagermodul (12') umsetzbar oder zu einer Servicestation transportierbar ist.

5. Umschlaganlage nach Anspruch 4,
**dadurch gekennzeichnet,**
**daß** das Service-Fahrzeug (40) kranartig nach Art einer Winkelkatze ausgebildet ist, die zwei parallele Kragarme (41) mit endseitigen Lastaufnahmemitteln (42) aufweist, die mit korrespondierenden Anschlagpunkten (43) am Ladekran (13) zusammenwirken.

6. Umschlaganlage nach Anspruch 4,
**dadurch gekennzeichnet,**
**daß** das Service-Fahrzeug (40) als Brückenfahrzeug (47) aus einem auf einer Brücke (48) mit Schienenfahrbahn (48.1) verfahrbaren Shuttle (49, 49.1, 49.2) besteht, das an den Ladekran (13) ankoppelbar ist, wobei sich die Schienenfahrbahn (48.1) der Brücke (48) auf demselben Höhenniveau wie eine Schienenfahrbahn (21.1) des Ladekranes (21) befindet, so daß beide Schienenfahrbahnen (21.1, 48.1) koppelbar sind.

7. Umschlaganlage nach Anspruch 6,
**dadurch gekennzeichnet,**
**daß** das Shuttel (49, 49.1, 49.2) batteriebetrieben und in einer Parkposition auf der Brücke (48) aufladbar ist oder mit einem Diesel-Elektro-Antrieb ausgestattet ist.

8. Umschlaganlage nach Anspruch 1,
**dadurch gekennzeichnet,**
**daß** der Ladekran (13) nach Art eines Stapelkranes ausgeführt ist.

9. Umschlaganlage nach Anspruch 1,
**dadurch gekennzeichnet,**
**daß** über die Ladeanlage (14) zwei verschiedenartige Transportmittel im Form von LKW-s (25) und Waggons (35) bedienbar sind.

10. Umschlaganlage nach Anspruch 9,
**dadurch gekennzeichnet,**
**daß** die ebenerdige Ladestation (22) für LkW (25) relativ zu dem zugeordneten und in der darüber liegenden Ebene befindlichen Zwischenpuffer (23) derartig angeordnet ist, daß der sicherheitskritische Bereich oberhalb der Fahrerkabine des LKW (25) direkt unterhalb des Zwischenpuffers (23) und damit außerhalb der Ladestation gelegen ist.

11. Umschlaganlage nach anspruch 9 oder 10,
**dadurch gekennzeichnet,**
**daß** zur manuellen Ausführung des Ladevorganges für einen LKW (25) eine Checker-Kabine (26) vorgesehen ist, die im unterhalb des der Ladestation (22) zugewandten Endbereiches des Zwischenpuffers (23) angeordnet ist.

12. Umschlaganlage nach anspruch 11,
**dadurch gekennzeichnet,**
**daß** zur Gewährleistung einer ungehinderten Sicht zum Ladekran (13) und zum LKW (25) die Checker-Kabine (26) quer zur den Lagermodulen (12) horizontal verfahrbar ist.

13. Umschlaganlage nach einem der Ansprüche 1 bis 12
**dadurch gekennzeichnet,**
**daß** der Ladevorgang durch Überwachungskameras in eine Zentrale
übermittelbar und von dort fernsteuerbar ist.

14. Umschlaganlage nach einem der Ansprüche 1 bis 13,
**dadurch gekennzeichnet,**
**daß** der als Verbindungsglied zwischen den Zwischenpuffern (23, 29) operierende und als Bückenkran ausgeführte Umsetztransporter (28) mit einem niedrigbauenden schienengeführten Satelliten-Trägerfahrzeug (31) zusammenwirkt, das mit einer Hubausrüstung (31.1) zur Aufnahme von Stückgut (10) ausgestattet ist.

15. Umschlaganlage nach einem der Ansprüche 1 bis 14,
**dadurch gekennzeichnet,**
**daß** der oberhalb des bahnseitigen Zwischenpuffers (29) operierende manuelle Ladekran (33) aus einer Brücke (36) und einer Katze (37) besteht, an der ein Spreader (38) angebracht ist.

16. Umschlaganlage nach Anspruch 14,
**dadurch gekennzeichnet,**
**daß** im Anschluß an den bahnseitigen Zwischenpuffer (29) und unterhalb des Ladekranes (33) ein zusätzlicher Brückenkran (54) vorgesehen ist, dessen Schienenfahrbahn (57) auf demselben Höhenniveau wie die Schienenfahrbahn (53) des Zwischenpuffers (29) angeordnet ist und mit dieser koppelbar ist.

17. Umschlaganlage nach Anspruch 15,
**dadurch gekennzeichnet,**
**daß** an dem den Zwischenpuffer (29) gegenüberliegenden Ende des zusätzlichen Brückenkrans (54) ein weiterer Zwischenpuffer (58) angeordnet ist.

18. Umschlaganlage nach einem der vorstehenden Ansprüche,
**dadurch gekennzeichnet,**
**daß** für einen Umschlag zu einem Schiff (3, 4, 5) das Lager (9) entlang eines Kais (2) angeordnet ist, an dem mindestens eine Containerbrücke (6) quer zu den Lagermodulen (12) und längs des Schiffes (3, 4, 5) verfahrbar operiert.

19. Umschlaganlage nach Anspruch 18,
**dadurch gekennzeichnet,**
**daß** zwischen der Containerbrücke (6) und den Lagermodulen (12) fahrerlose Transportfahrzeuge (FTF) (7) operieren, wobei als Schnittstelle zur Containerbrücke (6) ein Ladegestell (15) vorgesehen ist und als Schnittstelle zum Lager (9) ein jedem Lagermodul (12) vorgeschalteter Übergabeplatz (8) vorgesehen ist.

20. Umschlaganlage nach Anspruch 19,
**dadurch gekennzeichnet,**
**daß** zur Anpassung an mehrere parallel zum Kai (2) verlaufende Fahrspuren (17) des FTF (7) das Ladegestell (15) längs des Brückenportals (6.1) positionierbar ist.

21. Umschlaganlage nach Anspruch 19,
**dadurch gekennzeichnet,**
**daß** der Übergabeplatz (8) an jedem Lagermodul (12) ein mehrere Lagerplätze umfassender Zwischenpuffer (11) aufweist.

22. Umschlaganlage nach Anspruch 19,
**dadurch gekennzeichnet,**
**daß** für die Stückgutübernahme/-übergabe an dem nach Art eines vom FTF (7) unterfahrbaren Ladebocks ausgeführten Übergabeplatz (8) jedes FTF (7) mit einer Hubausrüstung (7.1) ausgestattet ist.

## Claims

1. Transfer installation for piece goods (10), in particular for ISO containers, having a warehouse (9) comprising individual line-like storage modules (12), and having at least one loading installation (14) which can be displaced transversely to the storage modules (12) and is intended for land-going means of transport (25, 35), between which a loading crane (13) assigned to each storage module (12) operates, **characterized in that** the loading installation (14) comprises at least two ground-level loading stations (22, 32) for means of transport (25, 35), to which is assigned in each case one intermediate buffer store (23, 29) which is arranged on the second level, located above the means of transport, has at least one storage location and from the respective means of transport (25, 35) can be manually loaded/unloaded by means of an associated loading crane (13, 33) in each case, the intermediate buffer stores (23, 29) being connected to one another via a transfer transporter (28) and the intermediate buffer store (23) being connected to the warehouse (9) via the loading crane (13).

2. Transfer installation according to Claim 1, **characterized in that**, with the loading crane (13) functioning directly as a loading crane, bypassing an intermediate buffer store (23) provided as an interface to the warehouse (9), it is possible to serve a loading station (22).

3. Transfer installation according to Claim 1, **characterized in that** the transfer transporter (28) provided is a fully automatic gantry crane which moves on a third level, located above the intermediate buffer stores (23, 29).

4. Transfer installation according to Claim 1, **characterized in that** provided in order to ensure low-disruption operation is a service vehicle (40) which is arranged on the third level of the loading installation (14) and by means of which the loading crane (13) can be transferred from one storage module (12) to a further, parallel storage module (12') or can be transported to a service station.

5. Transfer installation according to Claim 4, **characterized in that** the service vehicle (40) is of crane-like design in the manner of an angled crab which has two parallel extension arms (41) with end load-bearing means (42) which interact with corresponding points of attachment (43) on the loading crane (13).

6. Transfer installation according to Claim 4, **characterized in that** the service vehicle (40), as a bridge vehicle (47), comprises a shuttle (49, 49.1, 49.2) which can be displaced on a bridge (48) with a railway (48.1) and can be coupled to the loading crane (13), the railway (48.1) of the bridge (48) being located on the same level as a railway (21.1) of the loading crane (13), with the result that the two railways (21.1, 48.1) can be coupled.

7. Transfer installation according to Claim 6, **characterized in that** the shuttle (49, 49.1, 49.2) is battery-operated and can be charged in a parking position on the bridge (48) or is provided with a diesel-electric drive.

8. Transfer installation according to Claim 1, **characterized in that** the loading crane (13) is configured in the manner of a stacker crane.

9. Transfer installation according to Claim 1, **characterized in that** the loading installation (14) can serve two different means of transport in the form of trucks (25) and rail cars (35).

10. Transfer installation according to Claim 9, **characterized in that** the ground-level loading station (22) for trucks (25) is arranged relative to the associated intermediate buffer store (23), which is located on the level located above the trucks, such that the safety-critical region above the driver's cab of the truck (25) is located directly beneath the intermediate buffer store (23) and thus outside the loading station.

11. Transfer installation according to Claim 9 or 10, **characterized in that** provided for executing the loading operation for a truck (25) manually is a checker's cab (26) which is arranged beneath that end region of the intermediate buffer store (23) which is directed towards the loading station (22).

12. Transfer installation according to Claim 11, **characterized in that**, in order to ensure an unobstructed view of the loading crane (13) and the truck (25), the checker's cab (26) can be displaced horizontally, transversely to the storage modules (12).

13. Transfer installation according to one of Claims 1 to 12, **characterized in that** the loading operation can be transmitted, by monitoring cameras, into a control centre and controlled remotely from there.

14. Transfer installation according to one of Claims 1 to 13, **characterized in that** the transfer transporter (28), which operates as connecting member between the intermediate buffer stores (23, 29) and is configured as a gantry crane, interacts with a low-level rail-borne satellite carrier vehicle (31) which is provided with lifting equipment (31.1) for accommodating piece goods (10).

15. Transfer installation according to one of Claims 1 to 14, **characterized in that** the manual loading crane (33), which operates above the railroad-based intermediate buffer store (29), comprises a bridge (36) and a crab (37) on which a spreader (38) is fitted.

16. Transfer installation according to Claim 14, **characterized in that** an additional bridge crane (54) is provided to follow the railroad-based intermediate buffer store (29), and beneath the loading crane (33), and has a railway (57) which is arranged on the same level as the railway (53) of the intermediate buffer store (29) and can be coupled to the same.

17. Transfer installation according to Claim 15, **characterized in that** a further intermediate buffer store (58) is arranged at that end of the additional bridge crane (54) which is located opposite the intermediate buffer store (29).

18. Transfer installation according to one of the preceding claims, **characterized in that**, for transfer to a ship (3, 4, 5), the warehouse (9) is arranged along a quay (2) on which at least one container bridge (6) operates such that it can be displaced transversely to the storage modules (12) and along the ship (3, 4, 5).

19. Transfer installation according to Claim 18, **characterized in that** driverless transporting vehicles (DTV) (7) operate between the container bridge (6) and the storage modules (12), a loading framework (15) being provided as the interface with the container bridge (6) and a transfer location (8) arranged upstream of each storage module (12) being provided as the interface with the warehouse (9).

20. Transfer installation according to Claim 19, **characterized in that**, for adaptation to a plurality of travelling lanes (17), running parallel to the quay (2), of the DTV (7), the loading framework (15) can be positioned along the bridge portal (6.1).

21. Transfer installation according to Claim 19, **characterized in that** the transfer location (8), at each storage module (12), has an intermediate buffer store (11) comprising a plurality of storage locations.

22. Transfer installation according to Claim 19, **characterized in that**, for receiving/transferring piece goods at the transfer location (8), which is configured in the manner of a loading platform beneath which the DTV (7) can travel, each DTV (7) is provided with lifting equipment (7.1).

## Revendications

1. Installation de transbordement pour colis (10), notamment pour conteneurs ISO, comportant un entrepôt (9) constitué de modules (12) individuels d'entreposage linéaires et au moins une installation (14), mobile transversalement aux modules (12) d'entreposage, de chargement de moyens (25, 35) de transport terrestre, une grue (13) de chargement, associée à chaque module (12) d'entreposage, opérant entre l'entrepôt (9) et l'installation (14) de chargement,
**caractérisée en ce que** l'installation (14) de chargement comprend au moins deux postes (22, 32) de chargement au niveau du sol pour des moyens (25, 35) de transport, à chacun desquels est associé un espace (23, 29) d'entreposage intermédiaire disposé au deuxième niveau, sus-jacent, et comportant au moins un emplacement d'entreposage, espace à partir duquel, au moyen d'une grue (13, 33) de chargement respectivement associée, le moyen (25, 35) respectif de transport peut être manuellement déchargé/chargé, les espaces (23, 29) d'entreposage intermédiaire étant reliés entre eux par l'intermédiaire d'un convoyeur (28) de transfert et l'espace (23) d'entreposage intermédiaire étant relié à l'entrepôt (9) par l'intermédiaire de la grue (13) de chargement.

2. Installation de transbordement suivant la revendication 1,
**caractérisée en ce que** la grue (13) de chargement peut servir un poste (22) de chargement sans passer par un espace (23) d'entreposage intermédiaire prévu comme interface avec l'entrepôt (9), servant ainsi directement de grue de chargement.

3. Installation de transbordement suivant la revendication 1,
**caractérisée en ce qu'**il est prévu comme convoyeur (28) de transfert un pont portique entièrement automatique, qui se déplace à un troisième niveau situé au-dessus des espaces (23, 29) d'entreposage intermédiaire.

4. Installation de transbordement suivant la revendication 1,
**caractérisée en ce que**, afin de garantir un déroulement peu perturbé de l'exploitation, il est prévu un véhicule (40) de service disposé au troisième niveau de l'installation (14) de chargement, véhicule par lequel la grue (13) de chargement peut être transférée d'un module (12) d'entreposage à un autre module (12') d'entreposage parallèle, ou à un poste de service.

5. Installation de transbordement suivant la revendication 4,
**caractérisée en ce que** le véhicule (40) de service est réalisé à la manière d'un chariot à treuil latéral de pont roulant, qui comporte deux bras (41) porteurs parallèles, pourvus à leurs extrémités de moyens (42) récepteurs de charge qui coopèrent avec des points (43) d'accrochage correspondants sur la grue (13) de chargement.

6. Installation de transbordement suivant la revendication 4,
**caractérisée en ce que** le véhicule (40) de service est constitué, en tant que véhicule (47) sur portique, d'une navette (49, 49.1, 49.2) qui est mobile sur un portique (48) pourvu d'une voie (48.1) de roulement et qui peut être accouplée à la grue (13) de chargement, la voie (48.1) de roulement du portique (48) se trouvant au même niveau qu'une voie (21.1) de roulement de la grue de chargement (13), de sorte que les deux voies (21.1, 48.1) de roulement peuvent être accouplées.

7. Installation de transbordement suivant la revendication 6,
**caractérisée en ce que** la navette (49, 49.1, 49.2) fonctionne sur batterie et peut être rechargée dans une position de rangement sur le portique (48), ou est équipée d'un entraînement Diesel-électrique.

8. Installation de transbordement suivant la revendication 1,
**caractérisée en ce que** la grue (13) de chargement est conçue à la manière d'une grue gerbeuse.

9. Installation de transbordement suivant la revendication 1,
**caractérisée en ce que** l'installation (14) de chargement permet de servir deux types différents de moyens de transport, sous la forme de camions (25) et de wagons (35).

10. Installation de transbordement suivant la revendication 9,
**caractérisée en ce que** le poste (22) de chargement au niveau du sol pour camions (25) est disposé, par rapport à l'espace (23) d'entreposage intermédiaire associé, situé au niveau sus-jacent, de telle sorte que la zone de sécurité critique au-dessus de la cabine du conducteur du camion (25) se trouve juste en dessous de l'espace (23) d'entreposage intermédiaire et donc en dehors du poste de chargement.

11. Installation de transbordement suivant la revendication 9 ou 10, **caractérisée en ce que**, pour l'exécution manuelle du processus de chargement d'un camion (25), il est prévu une cabine (26) de contrôleur qui est disposée en dessous de la région terminale de l'espace (23) d'entreposage intermédiaire qui est tournée vers le poste (22) de chargement.

12. Installation de transbordement suivant la revendication 11,
**caractérisée en ce que**, afin de garantir une vision non entravée vers la grue (13) de chargement et vers le camion (25), la cabine (26) de contrôleur est mobile horizontalement transversalement aux modules (12) d'entreposage.

13. Installation de transbordement suivant l'une des revendications 1 à 12, **caractérisée en ce que** le processus de chargement peut être transmis par des caméras de surveillance à un poste central, d'où il peut être commandé à distance.

14. Installation de transbordement suivant l'une des revendications 1 à 13, **caractérisée en ce que** le convoyeur (28) de transfert, servant d'élément de liaison entre les espaces (23, 29) d'entreposage intermédiaire et réalisé sous forme de pont portique, coopère avec un véhicule (31) porteur satellite de construction basse, roulant sur des rails, qui est doté d'un équipement (31.1) de levage pour prendre en charge les colis (10).

15. Installation de transbordement suivant l'une des revendications 1 à 14, **caractérisée en ce que** la grue (33) de chargement manuelle qui opère au-dessus de l'espace (29) d'entreposage intermédiaire côté transport ferroviaire est constitué d'un portique (36) et d'un chariot (37) sur lequel est monté un cadre (38) de préhension.

16. Installation de transbordement suivant la revendication 14,
**caractérisée en ce qu'**un pont (54) portique supplémentaire est prévu à la suite de l'espace (29) d'entreposage intermédiaire côté transport ferroviaire et en dessous de la grue (33) de chargement, pont dont la voie (57) de roulement est disposée au même niveau que la voie (53) de roulement de l'espace (29) d'entreposage intermédiaire et peut être accouplée à celle-ci.

17. Installation de transbordement suivant la revendication 15,
**caractérisée en ce qu'**un espace (58) supplémentaire d'entreposage intermédiaire est disposé à l'extrémité du pont (54) portique supplémentaire qui est opposée à l'espace (29) d'entreposage intermédiaire.

18. Installation de transbordement suivant l'une des revendications précédentes, **caractérisée en ce que**, pour un transbordement sur un navire (3, 4, 5), l'entrepôt (9) est disposé le long d'un quai (2) sur lequel opère au moins un pont (6) gerbeur de conteneurs, mobile transversalement aux modules (12) d'entreposage et le long du navire (3, 4, 5).

19. Installation de transbordement suivant la revendication 18,
**caractérisée en ce que** des chariots (7) sans conducteur opèrent entre le pont (6) gerbeur de conteneurs et les modules (12) d'entreposage, un bâti (15) de chargement étant prévu comme interface vers le pont (6) gerbeur de conteneurs et un emplacement (8) de remise, précédant chaque module (12) d'entreposage, étant prévu comme interface vers l'entrepôt (9).

20. Installation de transbordement suivant la revendication 19,
**caractérisée en ce que** le bâti (15) de chargement peut être positionné le long du portique (6.1) de pont roulant afin de s'adapter à plusieurs voies (17) de circulation du chariot (7) sans conducteur qui s'étendent parallèlement au quai (2).

21. Installation de transbordement suivant la revendication 19,
**caractérisée en ce que** l'emplacement (8) de remise prévu à chaque module (12) d'entreposage comporte un espace (11) d'entreposage intermédiaire comportant plusieurs emplacements d'entreposage.

22. Installation de transbordement suivant la revendication 19,
**caractérisée en ce que** chaque chariot (7) sans conducteur est doté d'un équipement (7.1) de levage pour la prise en charge/remise de colis de/à l'emplacement (8) de remise réalisé à la manière d'un portique de chargement en dessous duquel peut circuler le chariot (7) sans conducteur.
